# EUROPEAN PATENT SPECIFICATION

(11) **EP 4 582 769 B1**
(45) Date of publication and mention of the grant of the patent: **18.11.2026**
(21) Application number: 23860875.6
(22) Date of filing: 30.08.2023
(51) Int. Cl.: G01B 11/02, G01N 21/88, G01N 21/95, G06T 7/00, G06N 3/08

(54) **LEARNING MODEL-BASED DIMENSION MEASUREMENT DEVICE AND METHOD**
LERNMODELLBASIERTE DIMENSIONSMESSVORRICHTUNG UND VERFAHREN
DISPOSITIF ET PROCÉDÉ DE MESURE DE DIMENSION BASÉE SUR UN MODÈLE D'APPRENTISSAGE

(30) Priority: 31.08.2022 KR 20220109769; 09.08.2023 KR 20230103918
(43) Date of publication of application: 09.07.2025
(73) Proprietor: LG Energy Solution, Ltd., Seoul 07335 (KR)
(72) Inventor: KIM, Jaejin, Daejeon 34122 (KR); KIM, Tae Young, Daejeon 34122 (KR)
(74) Representative: Goddar, Heinz J.
(86) International application number: PCT/KR2023/012882
(87) International publication number: WO 2024/049199

(56) References cited:
- KR-A- 20180 094 111
- KR-A- 20210 057 203
- KR-A- 20220 088 154
- KR-B1- 102 154 953
- US-A1- 2021 035 833
- US-A1- 2021 302 155

## Description

This application claims priority to and the benefit of Korean Patent Application No. 10-2022-0109769 filed in the Korean Intellectual Property Office on August 31, 2022 and Korean Patent Application No.10-2023-0103918 filed in the Korean Intellectual Property Office on August 9, 2023.

### [Technical Field]

The present invention relates to an apparatus and method for measuring size, and more particularly, to an apparatus and method for obtaining dimension information of a measurement object in an image of interest using a pre-trained learning model.

### [Background Art]

As the price of energy sources rises due to depletion of fossil fuels and interest in environmental pollution increases, a demand for secondary batteries as an ecofriendly alternative energy source is rapidly increasing.

Lithium secondary batteries among secondary batteries are being applied to various industrial fields from as well as mobile application devices to automobiles, robots, and energy storage devices, as a response to today's environmental regulations and high oil price issues.

These lithium batteries are generally classified into cylindrical, prismatic, or pouch types depending on the shape of the exterior material in which the electrode assembly is accommodated.

Among these, cylindrical batteries may be provided in a cell-to-pack (CTP) structure consisting of a plurality of battery cells. In other words, a cylindrical battery is provided in a structure which is assembled by winding electrodes including a separator between an anode and a cathode and inserting it inside a battery can.

These cylindrical batteries undergo quality inspection after the assembly process.

Generally, in quality inspection of cylindrical batteries, the dimensions of the relevant areas are measured using images of the object to be measured in order to determine the location of the weld, the tension of the weld, or any defects in battery components that occur during any manufacturing process.

A conventional size measuring device detects edges of a measurement object corresponding to a preset threshold brightness value from an object image, which is a brightness image (gray model), extracts pixel information of the detected edges, and obtains dimension information of the measurement object.

However, the conventional size measuring device has the disadvantage that, when an error occurs in program logic previously designed by an engineer, a boundary line of the measurement object on the object image is incorrectly detected, thereby reducing reliability of the dimension information.

US 2021/302155 A1 discloses a dimension measuring device that shortens a time required for dimension measurement and eliminates errors caused by an operator. A dimension measuring device that measures a dimension of a measurement target using an input image is provided, in which a first image in which each region of the input image is labeled by region is generated by machine learning, an intermediate image including a marker indicating each region of the first image is generated based on the generated first image, a second image in which each region of the input image is labeled by region is generated based on the input image and the generated intermediate image, coordinates of a boundary line between adjacent regions are obtained by using the generated second image, coordinates of a feature point that defines a dimension condition of the measurement target are obtained by using the obtained coordinates of the boundary line, and the dimension of the measurement target is measured by using the obtained coordinates of the feature point.

KR 102154953 B1 discloses a model generation unit that learns segmented data by finger region from a plurality of finger-captured images of the upper, side, and lower parts of a finger, compares the labeled data of the finger circumference lengths of the third joint fingers for the finger-captured images with a reference value, inspects and relabels the labeled data of the third joint fingers based on the results of comparing the labeled data of the finger circumference lengths of the third joint fingers with a reference value, and learns data that determines the finger circumference lengths of a plurality of third joint finger-captured images to generate a model.

### [Detailed Description of the Invention]

### [Technical Problem]

To obviate one or more problems of the related art, embodiments of the present disclosure provide an apparatus for measuring size according to claim 1.

To obviate one or more problems of the related art, embodiments of the present disclosure also provide a method for measuring size according to claim 5.

### [Technical Solution]

The invention is set out in the appended claims. In order to achieve the objective of the present disclosure, an apparatus of learning model-based size measurement may include a memory and a processor executing at least one instruction in the memory, and the at least one instruction may include an instruction to acquire an image of interest containing a measurement object of which size is to be measured, from an object image, and an instruction to input the image of interest into a pre-trained learning model and to output dimension information of the measurement object as result data.

Here, the pre-trained learning model may be a deep learning based learning model.

The instruction to output dimension information of the measurement object as result data may include an instruction to segment the image of interest into at least one physical object using the pre-trained learning model and to label a size measurement point of the measurement object.

The instruction to acquire the image of interest may include an instruction to obtain the image of interest that contains the measurement object, from the object image using a rule-based algorithm.

The instruction to acquire the image of interest includes an instruction to obtain the image of interest by performing image pre-processing on the object image.

According to another embodiment of the present disclosure, a method of learning model-based size measurement may include acquiring an image of interest containing a measurement object of which size is to be measured, from an object image, and inputting the image of interest into a pre-trained learning model and to outputting dimension information of the measurement object as result data.

Here, the pre-trained learning model may be a deep learning based learning model.

The outputting dimension information of the measurement object as result data may include segmenting the image of interest into at least one physical object using the pre-trained learning model and to label a size measurement point of the measurement object.

The acquiring the image of interest may include obtaining the image of interest that contains the measurement object, from the object image using a rule-based algorithm.

The acquiring the image of interest may include obtaining the image of interest by performing image preprocessing on the object image.

### [Advantageous Effects]

The size measurement apparatus and method according to embodiments of the present invention can obtain highly reliable dimension measurement result data with improved precision by obtaining dimension information of a specific object in an image of interest using a pre-trained learning model.

### [Brief Description of the Drawings]

FIG. 1 shows false detected images of welded parts measured by a general size measuring device.
FIG. 2 is a block diagram of an apparatus for measuring size according to embodiments of the present invention.
FIG. 3 is a flowchart of a size measurement method using a size measuring apparatus according to embodiments of the present invention.
FIG. 4 is an image for explaining an image of interest of a size measuring apparatus according to embodiments of the present invention.
FIG. 5 is an image of a first current collector plate and an image of interest of a welded region extracted from the image of the first current collector plate, by the size measuring apparatus according to an embodiment of the present invention.
FIG. 6 shows preprocessed images to extract the image of interest in FIG. 5 according to embodiments of the present invention.
FIG. 7 shows an image of the second current collector plate and an image of interest extracted from the image of the second current collector plate according to another embodiment of the present invention.
FIG. 8 shows preprocessed images to extract the image of interest in FIG. 7 according to another embodiment of the present invention.
FIG. 9 shows images for explaining a method of measuring the size of an electrode region using a pre-trained learning model in the size measuring apparatus according to another embodiment of the present invention.

### [Reference Numerals]

100: memory
200: processor
300: transceiver
400: input interface
500: output interface
600: storage device
700: bus

### [Best Modes for Practicing the Disclosure]

The present invention may be modified in various forms and have various embodiments, and specific embodiments thereof are shown by way of example in the drawings and will be described in detail below. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

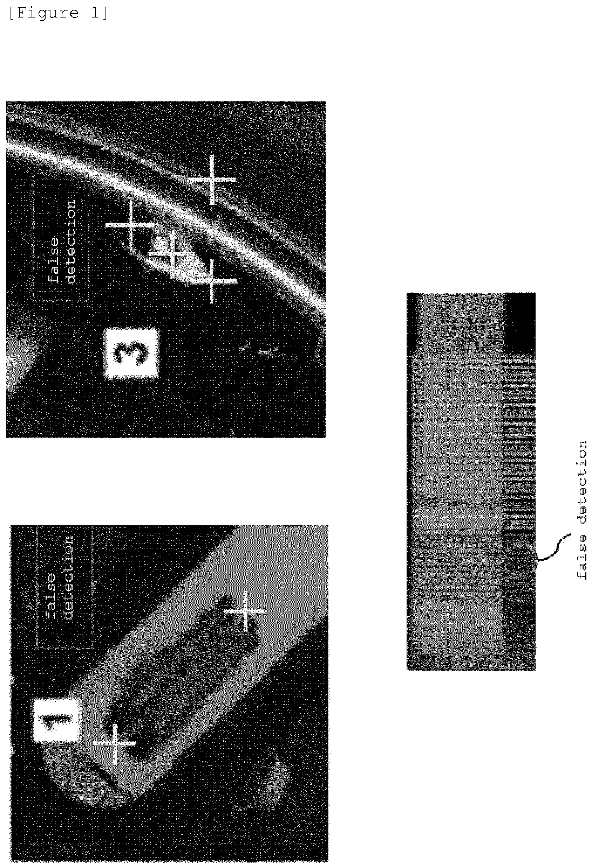

FIG. 1 shows false detected images of welded parts measured by a general size measuring device.

Referring to FIG. 1, a general size measuring device inspects quality of a manufactured battery after an assembly process.

In general, when inspecting the quality of a battery, dimensional information on at least one measurement object is required to check position and tension of welded parts or to determine whether there exists any defect in battery components that occured during the manufacturing process.

Accordingly, a general size measuring device acquires an object image including a measurement object and applies pre-designed program logic to the object image to obtain the edge of the measurement object. Thereafter, the size measuring device measures the dimensions of the measurement object based on the pixel information of the boundary line.

For example, a general size measuring device applies pre-designed program logic to a brightness image (gray model) in which the measurement object is photographed. Accordingly, the size measuring device detectes at least one pixel corresponding to a preset detection condition value (for example, a threshold brightness value) and obtains a boundary line of the measurement object based on this. Thereafter, the size measuring device measures the size of the measurement object based on the pixel information of the boundary line. Here, the pre-designed program logic may be a rule-based algorithm model. Additionally, the information on the at least one pixel may include at least one of a height, a width, the peak white, the peak dark, and an aspect ratio of the at least one pixel.

Meanwhile, program logic applied to a general size measuring device may be previously designed based on a previously secured object image. Accordingly, a general size measuring device to which a pre-designed program logic is applied may misdetect a boundary line of the measurement object or the measurement range of the boundary line may be specified incorrectly, when the brightness of the object image changes or the position of the measurement object within the object image changes, which leads to the disadvantage of lowering the reliability of the measured dimension information.

Therefore, in order to solve this problem, the present invention presents a size measuring apparatus and method with improved reliability using a pre-trained machine learning model.

Hereinafter, preferred embodiments according to the present invention will be described in detail with reference to the attached drawings.

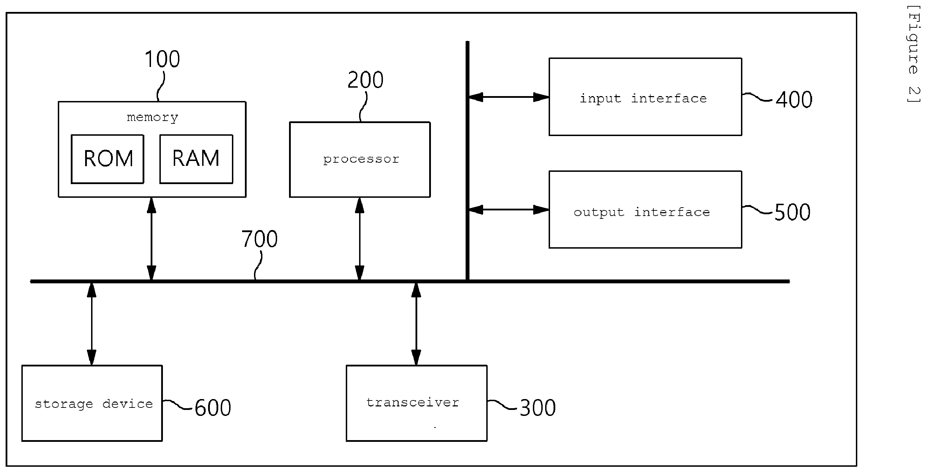

FIG. 2 is a block diagram of an apparatus for measuring size according to embodiments of the present invention.

Referring to FIG. 2, the size measuring apparatus according to embodiments of the present invention may be used during quality inspection performed after an assembly process of a cylindrical battery. However, it is not limited to what is described and may be applied to any process that requires dimensional measurement.

The size measuring apparatus may obtain dimension information of a measurement object by inputting an object image into a pre-trained learning model. Here, the object image may be an image of at least a part of an assembled battery.

To be more specific, the size measuring apparatus may acquire an object image including a measurement target and extract an interest image including a region of interest (ROI) of the measurement target from the object image.

Thereafter, the size measuring apparatus may obtain dimension information of the measurement object by inputting the image of interest into a pre-trained learning model.

Describing the size measuring apparatus in detail by configuration, the size measuring apparatus may include a memory 100, a processor 200, a transceiver 300, an input interface 400, an output interface 500, and a storage device 600.

According to embodiments, respective components 100, 200, 300, 400, 500, and 600 included in the size measuring apparatus are connected by a bus 700 and can communicate with each other.

Among the components 100, 200, 300, 400, 500, and 600, the memory 100 and the storage device 600 may include at least one of a volatile storage medium and a non-volatile storage medium. For example, the memory 100 and the storage device 600 may include at least one of read only memory (ROM) and random access memory (RAM).

Among these, the memory 100 may include at least one instruction executed by the processor 200.

According to embodiments, the at least one instruction may include an instruction to acquire an image of interest containing a measurement object of which size is to be measured, from an object image, and an instruction to input the image of interest into a pre-trained learning model and to output dimension information of the measurement object as result data.

The pre-trained learning model may be a deep learning based learning model.

The instruction to output dimension information of the measurement object as result data includes an instruction to segment the image of interest into at least one physical object using the pre-trained learning model and to label a size measurement point of the measurement object.

The instruction to acquire the image of interest may include an instruction to obtain the image of interest that contains the measurement object, from the object image using a rule-based algorithm.

The instruction to acquire the image of interest includes an instruction to obtain the image of interest by performing image pre-processing on the object image.

Meanwhile, the processor 200 may refer to a central processing unit (CPU), a graphics processing unit (GPU), or a dedicated processor on which methods according to embodiments of the present invention are performed. .

As described above, the processor 200 may execute at least one program command stored in the memory 100.

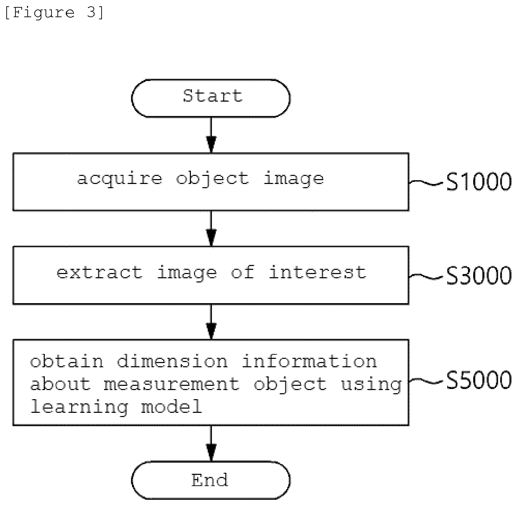

FIG. 3 is a flowchart of a size measurement method using a size measuring apparatus according to embodiments of the present invention.

Referring to FIG. 3, the size measuring apparatus according to embodiments of the present invention may acquire an object image (S1000). Here, the object image may be an image capcuring at least a part of a fully assembled battery and the object image may be an image including a measurement object for dimension measurement.

According to one embodiment, the object image may be a video image of at least one welded area that is a measurement target. For example, the welded area may be a welded area formed on a first or second current collector in a battery. Here, the first and second current collectors may be a negative electrode current collector and a positive electrode current collector, respectively.

According to another embodiment, the object image may be an X-ray image in which at least one electrode region, which is the measurement target, is photographed. For example, the electrode region may include a first electrode or a second electrode of a battery.

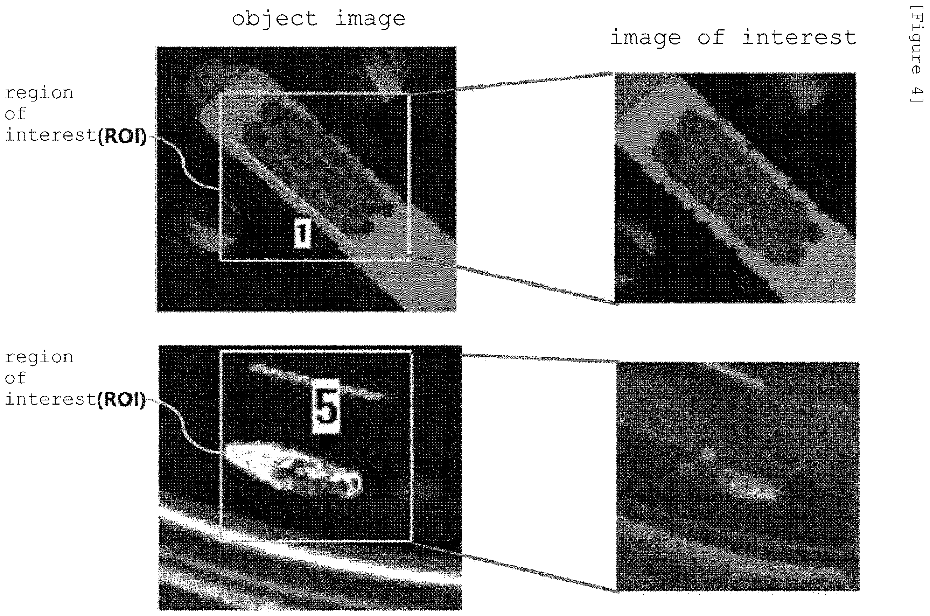

FIG. 4 is an image for explaining an image of interest of a size measuring apparatus according to embodiments of the present invention.

Referring to FIGS. 3 and 4, the size measuring apparatus may acquire an image of interest from an object image (S3000). Here, the image of interest may be a partial image in which a region of interest (ROI) of the measurement target is partially extracted from the object image. According to an embodiment, the size measuring apparatus may extract an image of interest after preprocessing the object image using a rule-based algorithm.

Thereafter, the size measuring apparatus may obtain dimension information about the measurement object from the image of interest using a pre-trained learning model (S5000). In other words, the size measuring apparatus may acquire dimension information of the measurement object by inputting the image of interest into a pre-trained learning model. Here, the machine learning model may be a classification learning model using deep learning.

To be described in more detail according to embodiments, the size measuring apparatus may use a classification learning model using deep learning, pre-trained by training data, to segment an image of interest as input data (feature), into measurement objects (class) to be measured. Thereafter, the size measuring apparatus may label the dimension measurement point of the measurement object, measure a pixel distance between the two labeled points, and output this as result data.

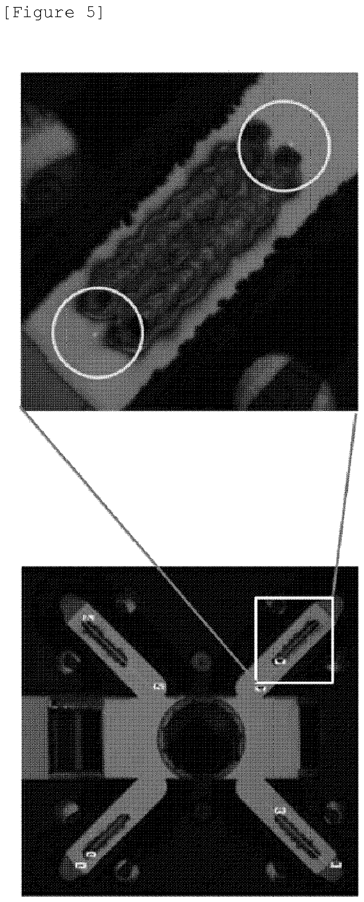

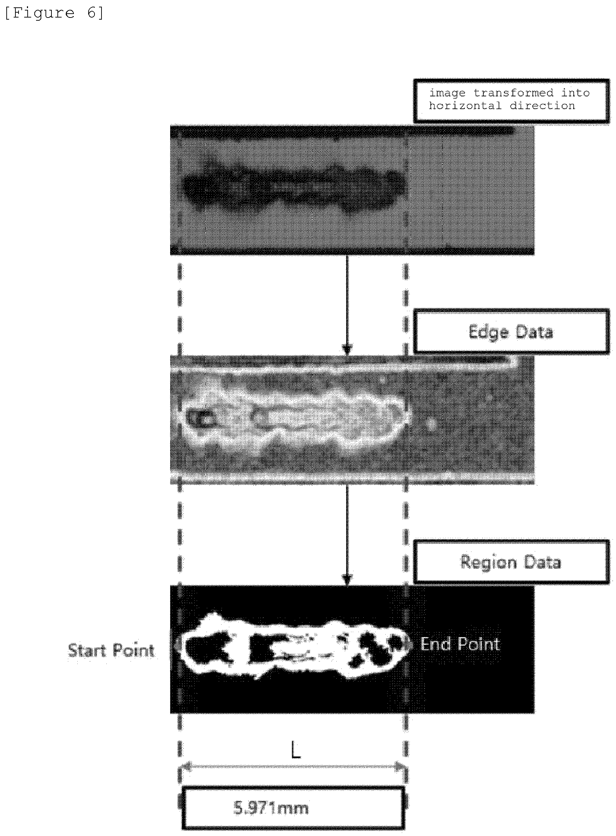

FIGs. 5 and 6 are images for explaining a method of measuring a size of a welded region using an apparatus for measuring size according to embodiments of the present invention. More specifically, FIG. 5 is an image of a first current collector plate and an image of interest of a welded region extracted from the image of the first current collector plate and FIG. 6 shows images preprocessed to extract the image of interest of FIG. 5.

Referring to FIG. 5, the size measuring apparatus according to embodiments of the present invention may acquire an image of a first current collector plate, which is an object image taken of a fully assembled battery, as described above. For example, the first current collector plate may be a negative current collector plate.

Thereafter, the size measuring apparatus may obtain an image of interest by preprocessing the image of the first current collector plate, which is the object image. Here, the image of interest may be an image including a welded region, which is a region of interest (ROI) in the image of the first current collector plate.

For example, when the image of the first current collector plate includes a plurality of welded regions, the size measuring apparatus may respectrively extract a plurality of images of interest, each of which include each welded region.

To describe the method of extracting the image of interest in more detail, with reference to FIG. 6, the size measuring apparatus may preprocess the image of the first current collector plate to detect at lease one position of at least one welded region from the image of the first current collector plate.

For example, in the case of a cylindrical battery for which an assembly process has been completed, a plurality of electrode tabs may be provided in contact with an area on the first current collector plate in a multi-layered state by electrodes which are wound inside a can. Here, at least one welded region may be formed on the first current collector plate for electrical contact with the electrode tabs. In addition, the at least one welded region may be formed in a diagonal direction on the first current collector plate (see FIG. 5). Accordingly, the size measuring apparatus may perform preprocessing of rotating the first current collector image so that the welded region is positioned horizontally or vertically.

Thereafter, the size measuring apparatus may identify the location of the welded region, which is an area of interest, based on the rotated image of the first current collector plate.

To be described in more detail according to an embodiment, the size measuring apparatus may convert the rotated image of the first current collector plate into a gray value image according to a preset rule-based algorithm. Thereafter, the size measuring apparatus may obtain the edge of the welded region in the image of the first current collector by inputting a predefined condition value. For example, the predefined condition value may be a preset pixel brightness value. In other words, the size measuring apparatus may extract at least one pixel with a preset pixel brightness value as the boundary of the welding zone. Thereafter, the size measuring apparatus may identify the location of the welded region based on at least one pixel information extracted as the boundary of the welded region.

Thereafter, the size measuring apparatus may convert the gray image of the first current collector plate of the value into a binary image. Afterwards, the size measuring apparatus may obtain the start and end coordinate points (Start Point, End Point) of the welded region, as shown in FIG. 6.

According to one embodiment, when the welded region in the image of the first current collector plate lies in the horizontal direction, the start coordinate point may be a pixel coordinate value located at the left edge of the welded region with respect to the x-axis, and the end coordinate point may be a pixel coordinate value located at the right edge of the welded region with respect to the x-axis.

According to another embodiment, when the welded region in the image of the first current collector plate lies in the vertical direction, the start coordinate point may be a pixel coordinate value of the welded part located at the top with respect to the y-axis, and the end coordinate point may be a pixel coordinate value located at the bottom with respect to the y-axis.

According to embodiments, the size measuring apparatus may obtain the start and end coordinate points (Start Point, End Point) within the image of the first current collector plate based on a predefined pixel brightness value. For example, when the welded region in the image of the first current collector plate lies in the horizontal direction, the size measuring apparatus may check a pixel brightness value for each coordinate in the x-axis direction and compare it with a preset pixel brightness value. Here, the size measuring apparatus may set the first coordinate point having a brightness value that is greater or smaller than the preset pixel brightness value as the start coordinate point (Start Point). In addition, the size measuring apparatus may obtain the last coordinate point having a brightness value greater or smaller than a preset pixel brightness value as an end point.

Meanwhile, when the welded region in the image of the first current collector plate is located in the vertical direction, the size measuring apparatus may check a pixel brightness value for each coordinate in the y-axis direction and compare it with a preset pixel brightness value. Here, the size measuring apparatus may set the first coordinate point, which has a brightness value larger or smaller than a preset pixel brightness value, as a start point. Additionally, the size measuring apparatus may obtain the last coordinate point, which has a brightness value greater or smaller than the preset pixel brightness value, as an end point.

Thereafter, the size measuring apparatus may acquire at least one size measurement point based on the extracted boundary information of the welded region and the start and end coordinate points (Start Point, End Point). For example, the size measuring apparatus may obtain at least one size measurement point of the welded region using a sub-pixel algorithm. Here, the subpixel algorithm may be a method of determining a point with a brightness value of 1 pixel or less as a corner of an object using an interpolation method. Accordingly, the size measuring apparatus may finally obtain the boundary of the welded region in the image of the first current collector plate based on information on at least one size measurement point.

Therefore, the size measuring apparatus according to embodiments of the present invention may extract an image of interest from the image of the first current collector plate based on the boundary information of the welded region and the size measurement point information which are finally obtained through the preprocessing process. Thereafter, the extracted image of interest may be image processed (Overlay) by the size measuring apparatus.

Thereafter, the size measuring apparatus may input the processed image of interest into a pre-trained deep learning based classification learning model.

Thereafter, the size measuring apparatus may use the pre-trained classification learning model to segment the image of interest into a physical unit, the welded region of the first current collector plate, and then label the size measurement point of the welded region. For example, the size measuring apparatus may classify objects in the image of interest in pixel units and then label the size measurement points of welded regions.

Afterwards, the size measuring apparatus may measure pixel distance between two labeled size measurement points based on a pre-trained deep learning based classification learning model, thereby obtaining the size of the measurement object as result data. Here, the classification learning model may be a model of which at least one training data is transformed into various forms and then used as training data in order to increase the amount of training data. For example, the training data can be transformed in various ways, such as turning it upside down or left and right, changing brightness, saturation or hue, changing contrast, rotating or moving, and adding noise.

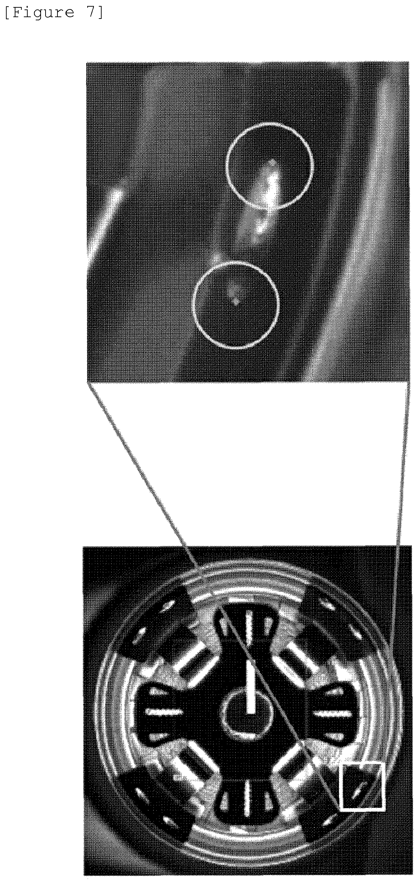

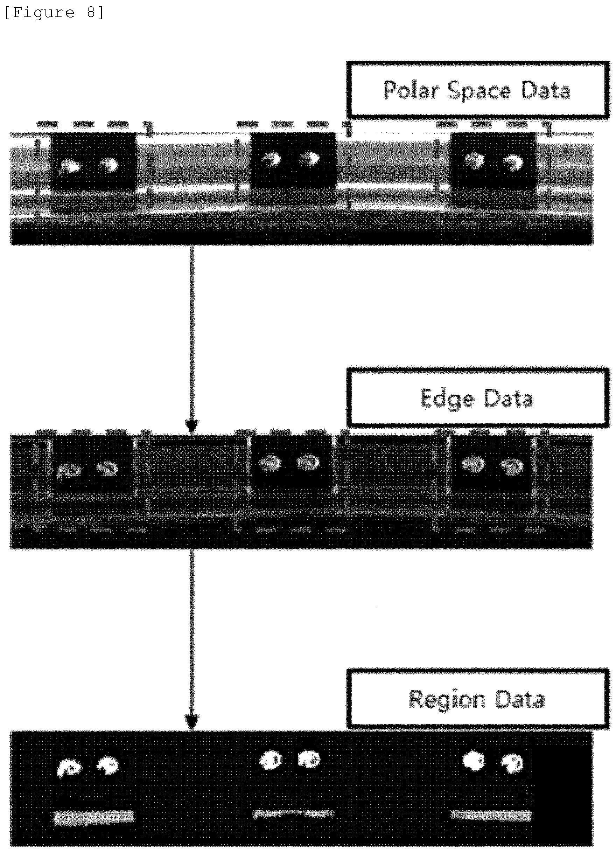

FIGs. 7 and 8 are images for explaining a method of measuring the size of a welded region using the size measuring apparatus according to another embodiment of the present invention. More specifically, FIG. 7 shows an image of the second current collector plate and an image of interest extracted from the image of the second current collector plate, and FIG. 8 shows images preprocessed to extract the image of interest in FIG. 7.

Referring to FIGS. 7 and 8, the size measuring apparatus according to another embodiment of the present invention may acquire the image of the second current collector plate, which is the object image, as described above. Here, the image of the second current collector plate is an image taken after a battery assembly process and may be an image of a positive current collector plate.

Thereafter, the size measuring apparatus may perform image preprocessing based on the image of the second current collector plate to obtain an image of interest.

To explain more specifically, generally, the welded region on the image of the second current collector has a specific pattern shape arranged symmetrically at the origin, as shown in FIG. 7. Accordingly, the size measuring apparatus may transform the object image into polar space data so that the welded region, which is a region of interest in the image of the second current collector plate, is positioned horizontally.

Thereafter, the size measuring apparatus may identify the location of the welded region, which is an area of interest, based on the trnasformed image of the second current collector plate.

To be described in more detail according to an embodiment, the size measuring apparatus may convert the rotated image of the second current collector plate into a gray value image according to a preset rule-based algorithm. Thereafter, the size measuring apparatus may input a predefined condition value to obtain the edge of the welded region in the image of the second current collector plate.

Thereafter, the size measuring apparatus may convert the gray image of the second current collector plate into a binary image. Afterwards, the size measuring apparatus may obtain the start and end coordinate points (Start Point, End Point) of the welded region. According to an embodiment, the size measuring apparatus obtains start and end coordinate points (Start Point, End Point) within the image of the second current collector plate based on a predefined pixel brightness value.

Thereafter, the size measuring apparatus may acquire at least one size measurement point based on the extracted boundary information of the welded region and the start and end coordinate points (Start Point, End Point). Accordingly, the size measuring apparatus may extract an image of interest from the image of the second current collector plate based on the boundary information of the welded region and the size measurement point information obtained through the preprocessing process.

Thereafter, the extracted image of interest may be image processed (Overlay) by the size measuring apparatus.

Thereafter, the size measuring apparatus may input the image processed image of interest into a pre-trained deep learning based lassification learning model.

Thereafter, the size measuring apparatus may segment the image of interest into at least one welded region of the second current collector plate, which is a physical unit, using the pre-trained classification learning model.

Thereafter, the size measuring apparatus may label the size measurement point of the welded region using the pre-trained deep learning based classification learning model (Deep-Leaning).

Thereafter, the size measuring apparatus may obtain the dimension of the measurement object as result data by measuring the pixel distance between two labeled dimension measurement points. Here, the classification learning model may be a model of which at least one training data is transformed into various forms and then used as training data in order to increase the amount of training data. For example, the training data can be transformed in various ways, such as turning it upside down or left and right, changing brightness, saturation or hue, changing contrast, rotating or moving, and adding noise.

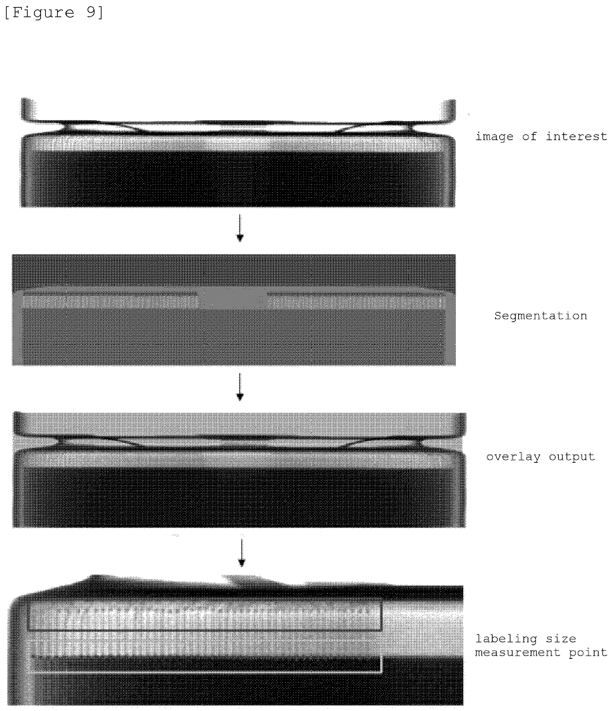

FIG. 9 shows images for explaining a method of measuring the size of an electrode region using a pre-trained learning model in the size measuring apparatus according to another embodiment of the present invention.

Referring to FIG. 9, the size measuring apparatus according to another embodiment of the present invention may obtain an object image from an image of the electrode region captured after the assembly process, as described above. For example, the electrode image may be an X-ray image.

Thereafter, the size measuring apparatus may extract an image of interest including a connection region of the anode and the cathode, which is a region of interest (ROI), from the electrode region image.

Thereafter, the extracted image of interest may be image processed (Overlay) by the size measuring apparatus.

Thereafter, the size measuring apparatus may input the image processed image of interest into a pre-trained deep learning based classification learning model. Accordingly, the size measuring apparatus may obtain length data of the electrode region connecting the cathode end and the anode end of the electrode.

To be more specific, the size measuring apparatus may segment the image of interest which is input into the classification learning model into a physical unit according to the pre-trained deep learning based classification learning model. According to an embodiment, the classification learning model may be a semantic segmentation model. For example, the size measuring apparatus may segment the image of interest as an electrode image.

Thereafter, the size measuring apparatus may label the size measurement point of the electrode region based on the classification learning model. For example, the size measurement points within the electrode region are the cathode end (first point) of the electrode, which is located close to a tab area, and the anode end (second point) of the electrode which is located close to an electrode body (area where a coated region of the electrode is formed). Here, the size measuring apparatus may label the size measurement points in plural numbers to correspond to the number of turns of the electrode.

Thereafter, the size measuring apparatus may measure a pixel distance between the labeled first point and the second point based on the pre-trained deep learning based classification learning model, thereby obtaining the length of the electrode to be measured as result data. Here, the classification learning model may be a model of which at least one training data is transformed into various forms and then used as training data in order to increase the amount of training data. For example, the training data can be transformed in various ways, such as turning it upside down or left and right, changing brightness, saturation or hue, changing contrast, rotating or moving, and adding noise.

The size measuring apparatus and method according to embodiments of the present invention have been described above.

The size measuring apparatus and method according to embodiments of the present invention can obtain highly reliable dimension measurement result data with improved precision by obtaining dimension information of a specific object in an image of interest using a pre-trained learning model.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also highlevel language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the the area of the present invention described in the appending claims.

## Claims

1. An apparatus of learning model-based size measurement, the apparatus comprising:
a memory (100); and
a processor (200) executing at least one instruction in the memory (100),
wherein the at least one instruction includes:
an instruction to acquire an image of interest containing a measurement object of which size is to be measured, from an object image, and
an instruction to input the image of interest into a pre-trained learning model and to output dimension information of the measurement object as result data;
**characterized in that**
the instruction to acquire the image of interest includes an instruction to obtain the image of interest by performing image pre-processing on the object image;
wherein the object image depicts a current collector plate arranged symmetrically at an origin;
wherein pre-processing the image of interest comprises transforming the object image into polar space data and determining start and end points of the measurement object within the image of interest based on pixel brightness values; and
wherein the output dimension information is determined based on a pixel distance between the start and end points.

2. The apparatus of claim 1, wherein the pre-trained learning model is a deep learning based learning model.

3. The apparatus of claim 1, wherein the instruction to output dimension information of the measurement object as result data includes an instruction to segment the image of interest into at least one physical object using the pre-trained learning model and to label a size measurement point of the measurement object.

4. The apparatus of claim 1, wherein the instruction to acquire the image of interest includes:
an instruction to obtain the image of interest that contains the measurement object, from the object image using a rule-based algorithm.

5. A method of learning model-based size measurement, the method comprising:
acquiring an image of interest containing a measurement object of which size is to be measured, from an object image; and
inputting the image of interest into a pre-trained learning model and to outputting dimension information of the measurement object as result data;
**characterized in that**
the acquiring the image of interest includes obtaining the image of interest by performing image preprocessing on the object image;
wherein the object image depicts a current collector plate arranged symmetrically at an origin;
wherein pre-processing the image of interest comprises transforming the object image into polar space data and determining start and end points of the measurement object within the image of interest based on pixel brightness values; and
wherein the output dimension information is determined based on a pixel distance between the start and end points.

6. The method of claim 5, wherein the pre-trained learning model is a deep learning based learning model.

7. The method of claim 5, wherein the outputting dimension information of the measurement object as result data includes segmenting the image of interest into at least one physical object using the pre-trained learning model and to label a size measurement point of the measurement object.

8. The method of claim 5, wherein the acquiring the image of interest includes obtaining the image of interest that contains the measurement object, from the object image using a rule-based algorithm.

## Patentansprüche

1. Vorrichtung zum Lernen einer modellbasierten Größenmessung, wobei die Vorrichtung Folgendes umfasst:
einen Speicher (100); und
einen Prozessor (200), der mindestens eine Anweisung in dem Speicher (100) ausführt,
wobei die mindestens eine Anweisung Folgendes beinhaltet:
eine Anweisung zum Erfassen eines Bildes von Interesse, das ein Messobjekt enthält, dessen Größe gemessen werden soll, aus einem Objektbild, und
eine Anweisung zum Eingeben des Bildes von Interesse in ein vortrainiertes Lernmodell und zum Ausgeben von Dimensionsinformationen des Messobjekts als Ergebnisdaten;
**dadurch gekennzeichnet, dass** die Anweisung zum Erfassen des Bildes von Interesse eine Anweisung zum Erhalten des Bildes von Interesse durch Durchführen einer Bildvorverarbeitung an dem Objektbild beinhaltet;
wobei das Objektbild eine Stromkollektorplatte darstellt, die symmetrisch an einem Ursprung angeordnet ist;
wobei die Vorverarbeitung des Bildes von Interesse das Transformieren des Objektbildes in Polarraumdaten und das Bestimmen von Start- und Endpunkten des Messobjekts innerhalb des Bildes von Interesse basierend auf Pixelhelligkeitswerten umfasst; und
wobei die ausgegebenen Dimensionsinformationen basierend auf einem Pixelabstand zwischen den Start- und Endpunkten bestimmt werden.

2. Vorrichtung nach Anspruch 1, wobei das vortrainierte Lernmodell ein Deep-Learning-basiertes Lernmodell ist.

3. Vorrichtung nach Anspruch 1, wobei die Anweisung zum Ausgeben von Dimensionsinformationen des Messobjekts als Ergebnisdaten eine Anweisung zum Segmentieren des Bildes von Interesse in mindestens ein physisches Objekt unter Verwendung des vortrainierten Lernmodells und zum Kennzeichnen eines Größenmesspunkts des Messobjekts beinhaltet.

4. Vorrichtung nach Anspruch 1, wobei die Anweisung zum Erfassen des Bildes von Interesse Folgendes beinhaltet:
eine Anweisung zum Erhalten des Bildes von Interesse, das das Messobjekt enthält, aus dem Objektbild unter Verwendung eines regelbasierten Algorithmus.

5. Verfahren zum Lernen einer modellbasierten Größenmessung, wobei das Verfahren Folgendes umfasst:
Erfassen eines Bildes von Interesse, das ein Messobjekt enthält, dessen Größe gemessen werden soll, aus einem Objektbild; und
Eingeben des Bildes von Interesse in ein vortrainiertes Lernmodell und zum Ausgeben von Dimensionsinformationen des Messobjekts als Ergebnisdaten;
**dadurch gekennzeichnet, dass** das Erfassen des Bildes von Interesse das Erhalten des Bildes von Interesse durch Durchführen einer Bildvorverarbeitung an dem Objektbild beinhaltet;
wobei das Objektbild eine Stromkollektorplatte darstellt, die symmetrisch an einem Ursprung angeordnet ist;
wobei die Vorverarbeitung des Bildes von Interesse das Transformieren des Objektbildes in Polarraumdaten und das Bestimmen von Start- und Endpunkten des Messobjekts innerhalb des Bildes von Interesse basierend auf Pixelhelligkeitswerten umfasst; und
wobei die ausgegebenen Dimensionsinformationen basierend auf einem Pixelabstand zwischen den Start- und Endpunkten bestimmt werden.

6. Verfahren nach Anspruch 5, wobei das vortrainierte Lernmodell ein Deep-Learning-basiertes Lernmodell ist.

7. Verfahren nach Anspruch 5, wobei das Ausgeben von Dimensionsinformationen des Messobjekts als Ergebnisdaten das Segmentieren des Bildes von Interesse in mindestens ein physisches Objekt unter Verwendung des vortrainierten Lernmodells und zum Kennzeichnen eines Größenmesspunkts des Messobjekts beinhaltet.

8. Verfahren nach Anspruch 5, wobei das Erfassen des Bildes von Interesse das Erhalten des Bildes von Interesse, das das Messobjekt enthält, aus dem Objektbild unter Verwendung eines regelbasierten Algorithmus beinhaltet.

## Revendications

1. Appareil de mesure de dimensions basé sur un modèle d'apprentissage, l'appareil comprenant :
une mémoire (100) ; et
un processeur (200) exécutant au moins une instruction dans la mémoire (100),
l'au moins une instruction comprenant :
une instruction pour acquérir, d'une image objet, une image d'intérêt contenant un objet à mesurer dont on doit mesurer la taille, et
une instruction pour entrer l'image d'intérêt dans un modèle d'apprentissage préformé, et produire des informations dimensionnelles sur l'objet à mesurer en tant que données résultantes ;
**caractérisé en ce que**
l'instruction pour acquérir l'image d'intérêt comprenant une instruction pour obtenir l'image d'intérêt en effectuant un prétraitement d'image sur l'image objet ;
l'image objet représentant une plaque collectrice de courant agencée symétriquement à un point d'origine ;
le prétraitement d'image de l'image d'intérêt comprenant la transformation de l'image objet en données spatiales polaires et la détermination de points de départ et d'arrivée de l'objet à mesurer dans le cadre de l'image d'intérêt d'après des valeurs de luminance de pixels ; et
les informations dimensionnelles émises étant déterminées en fonction d'une distance en pixels entre les points de départ et d'arrivée.

2. Appareil selon la revendication 1, le modèle d'apprentissage préformé étant un modèle d'apprentissage en apprentissage profond.

3. Appareil selon la revendication 1, l'instruction d'émission d'informations dimensionnelles sur l'objet à mesurer en tant que données résultantes comprenant une instruction de segmentation de l'image d'intérêt en au moins un objet physique en utilisant le modèle d'apprentissage préformé et de marquage d'un point de mesure de la taille de l'objet à mesurer.

4. Appareil selon la revendication 1, l'instruction d'acquisition de l'image d'intérêt comprenant :
une instruction d'obtention, de l'image objet, l'image d'intérêt contenant l'objet à mesurer en utilisant un algorithme à base de règles.

5. Procédé d'apprentissage de mesures dimensionnelles basé sur des modèles, le procédé comprenant :
l'acquisition, d'une image objet, d'une image d'intérêt contenant un objet à mesurer dont la taille doit être mesurée ; et
l'entrée de l'image d'intérêt dans un modèle d'apprentissage préformé, et l'émission d'informations dimensionnelles sur l'objet à mesurer en tant que données résultantes ;
**caractérisé en ce que**
l'acquisition de l'image d'intérêt comprenant l'obtention de l'image d'intérêt par l'exécution d'un prétraitement de l'image sur l'image objet ;
l'image objet représentant une plaque collectrice de courant agencée symétriquement à un point origine ;
le prétraitement de l'image de l'image d'intérêt comprenant la transformation de l'image objet en données spatiales polaires et la détermination de points de départ et d'arrivée de l'objet à mesurer dans le cadre de l'image d'intérêt d'après des valeurs de luminance de pixels ; et
les informations dimensionnelles émises étant déterminées en fonction d'un espacement de pixels entre les points de départ et d'arrivée.

6. Procédé selon la revendication 5, le modèle d'apprentissage préformé étant un modèle d'apprentissage profond.

7. Procédé selon la revendication 5, l'émission d'informations dimensionnelles sur l'objet à mesurer en tant que données résultantes comprenant la segmentation de l'image d'intérêt en au moins un objet physique utilisant le modèle d'apprentissage préformé et le marquage d'un point de mesure de la taille de l'objet à mesurer.

8. Procédé selon la revendication 5, l'acquisition de l'image d'intérêt comprenant l'obtention, de l'image objet à l'aide d'un algorithme à base de règles, de l'image d'intérêt contenant l'objet à mesurer.
